Europäisches Patentamt

European Patent Office

Office européen des brevets

(11) Publication number: 0 282 259
A2

# EUROPEAN PATENT APPLICATION

(21) Application number: 88301988.7

(22) Date of filing: 08.03.88

(51) Int. Cl.⁴: **A47J 42/10**

(30) Priority: 10.03.87 GB 8705591

(43) Date of publication of application:
14.09.88 Bulletin 88/37

(84) Designated Contracting States:
DE FR GB

(71) Applicant: PARK GREEN & COMPANY LIMITED
Eskdale Road The Trading Estate
Uxbridge Middlesex UB8 2RT(GB)

(72) Inventor: Adgey-Edgar, Alan George
Tithe House Tollgate
Maidenhead Berkshire, SL6 4LJ(GB)
Inventor: Reid, John David
21 Kestrel Close Westover Downs
High Wycombe Buckinghamshire, HP13
5JN(GB)

(74) Representative: Sheard, Andrew Gregory et al
Kilburn & Strode 30, John Street
London WC1N 2DD(GB)

(54) Grinding apparatus.

(57) Grinding apparatus 1 for use in a spice or condiment mill such as a pepper mill can be made using a sintered metal process and avoids the more costly and difficult process of machining the component parts from single pieces of metal. The apparatus 1 comprises a pair of blades 7 and optionally impelling vanes above an externally toothed male member 3, mounted on a central shaft 9, inside an internally toothed female member 5. On relative rotation of the central shaft 9 and therefore the male member 3 to the female member 5 the condiment is crushed in a crushing zone 10 between the blades 7 and the female member 5. The male member 3 and female member 5 cooperate to grind the crushed condiment in a grinding zone 12. Spacer elements in the form of lugs 17 at the base of the male member 3 bear upon an annular surface 19 of the female member 5 preventing further contact of the toothed members.

FIG. 1.

# GRINDING APPARATUS

This invention relates to grinding apparatus suitable for use in a spice or condiment mill such as a salt or pepper mill.

Grinding apparatus in which male and female members cooperatively act to grind the condiment are known. This apparatus is usually at the base of a condiment or spice reservoir.

To date such grinding apparatus in condiment or spice mills have been machined from steel, cast in iron or various alloys, or moulded in plastics material or mazak. Some types of apparatus rely on gravity to feed the condiment between the male and female members before and during grinding. Other types of apparatus have helical grooves cut in a male grinding member which cooperates with a female member, which in turn is also provided with grooves, thereby to crush the condiment. This extruding action of the male grinding member having helical grooves served to crush the spice or condiment as a preliminary step before grinding.

The extruding forces exerted on the condiment may be increased if the male and female member have oppositely machined helical grooves or screw threads. Usually the male and female member are machined from individual pieces of metal, such as hardened steel.

However, the manufacture of such apparatus requires considerable tooling and can be a lengthy operation. This can lead to an increase in costs. In addition, such manufacture is prone to production error, and if a mistake is made the apparatus may have to be scrapped, and machining must start again on a fresh piece of metal.

A less expensive alternative is to manufacture the members of the apparatus from sintered metal. Carbon steel powder can be compressed in a suitable mould and sintered by heating in an oven. However, this method of manufacture is not as suitable for members which comprise helical grooves for grinding, because of difficulties due to the technical complexities of the tooling and the resulting reduction in production performance.

This invention allows the cheaper and easier to produce sintered metal members to be used while retaining at least some of the advantages of the machined members having helical grooves, such as their impelling and/or crushing action.

According to a first aspect of the invention there is provided grinding apparatus suitable for use in a spice or condiment mill, the apparatus comprising a pair of male and female members, at least one blade extending from one of the members towards the other, the or each blade and said other member cooperating to crush condiment in use of the apparatus, and the male and female members having, below the or each blade, cooperating grinding surfaces to grind the crushed condiment.

The effect of the or each blade is to impel the condiment, such as peppercorns, towards the other member. This crushes the condiment (in what may be defined as the crushing zone) before being ground more finely by the cooperating grinding surfaces (in what may be defined as the grinding zone) below the or each blade.

Upstream of the blade(s) an impeller may be provided to propel condiment to the crushing zone and, ultimately, to the grinding zone. The impeller may comprise a plurality of vanes, which may extend radially from a central boss in the manner of a fan. The boss may be mounted on a central shaft bearing the male member.

In one embodiment of the invention one, some or all of the blade(s) may be angled back in the sense opposite to the sense of relative rotation of the member from which the or each blade extends. This arrangement leads to more effective crushing of the spice or condiment. The leading surface(s) of the blade(s) may be curved, preferably forming an arc of a circle in plan view. It is also preferred that an even number (for example two) blades are employed and these may be diametrically opposed to one another.

One preference is that the or each blade and/or vane is fixed to or integral with the male member. When the blades are integrally formed with the male member, they can be formed in the same mould when the male member is compressed and sintered.

A further preference is that the distance between the distal edge of the blade(s) and the member towards which they extend is between 0.1 and 0.4 millimetres for efficient crushing of spice or condiment the size of peppercorns.

The grinding surfaces of the male member and/or female member may be provided with cooperating teeth. Those on the male member may be provided on a bevelled portion of the member to cooperate with teeth provided in a correspondingly shaped portion of the female member. The teeth are preferably vertically aligned in one zone (eg the grinding zone) and non-vertically aligned in another (eg the crushing) zone. Alternatively, the teeth on one member may be slanted in a direction opposite to the teeth on the other member.

Another preference is that two vanes are provided, and especially that they extend, substantially horizontally, from one member towards the other member.

It is also preferable that any combination of the male member, female member, any number of blades and any number of vanes (if any) are manufactured out of sintered metal.

The male member and any number of the blades and/or vanes will usually be mounted on a central shaft for rotation within the confines of the female member.

The male and female member, and/or any number of the blades or vanes may be manufactured from sintered metal. The metal used may be powdered steel or an alloy of two or more powdered metals. A process for such manufacture usually comprises the steps

(a) compressing the metal powder in a suitable mould and sintereing in an oven,

(b) steam treating or impregnation with a non-toxic plastic to seal residual porosity to prevent the ingress of bacteria, and

(c) optionally plating with a plating metal such as nickel.

The male or female member may be provided with one or more spacer elements which bear on a surface of the other member. This arrangement prevents the grinding surfaces coming into direct contact with each other, and therefore ensures smooth relative rotation of the members and reduces blunting of the grinding surfaces.

Such apparatus may be incorporated into a condiment mill having a condiment reservoir such that the female member is situated below the reservoir.

Therefore, according to a second aspect of the invention, there is provided a spice or condiment mill comprising a reservoir for spice or condiment, grinding apparatus in accordance with the first aspect of the invention and means for rotating the male and female members of the grinding apparatus with respect to one another.

Preferably the male and female members are situated below the condiment reservoir.

Preferred aspects of the second aspect of the invention are as for the first aspect mutatis mutandis.

So that the invention may be more clearly understood, an embodiment will be described with reference to the accompanying drawings which show an example of the invention, in which:-

Figure 1 is a perspective view of grinding apparatus in accordance with the invention;

Figure 2 is a plan view of a male member forming part of the apparatus shown in Figure 1;

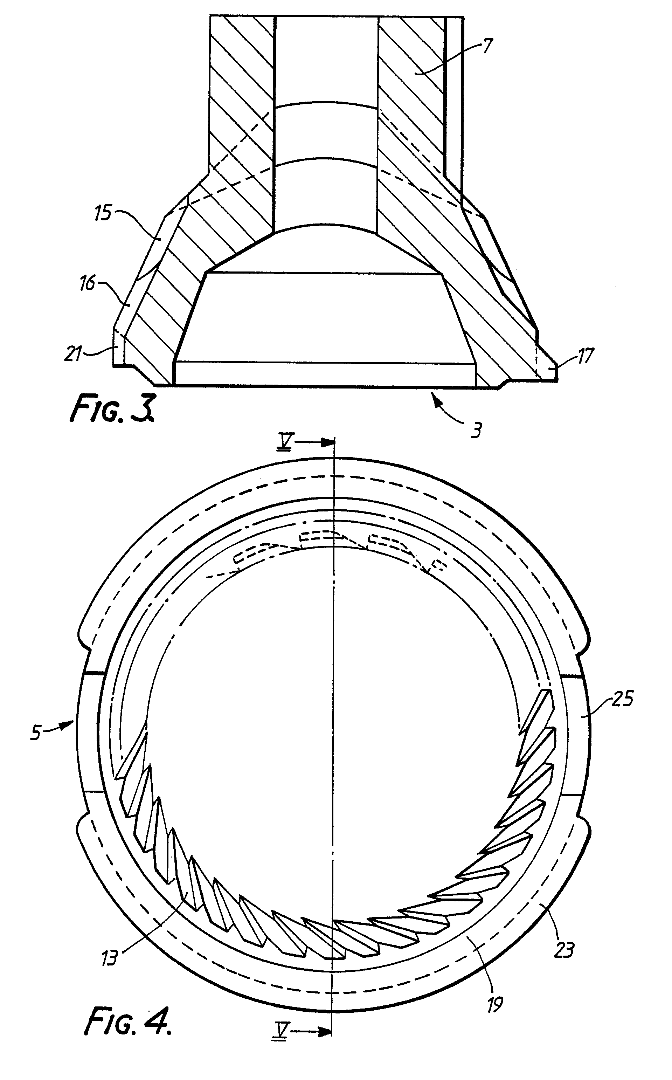

Figure 3 is a section of the male member shown in Figure 2 taken along the line III-III;

Figure 4 is a plan view of a female member forming part of the apparatus shown in Figure 1;

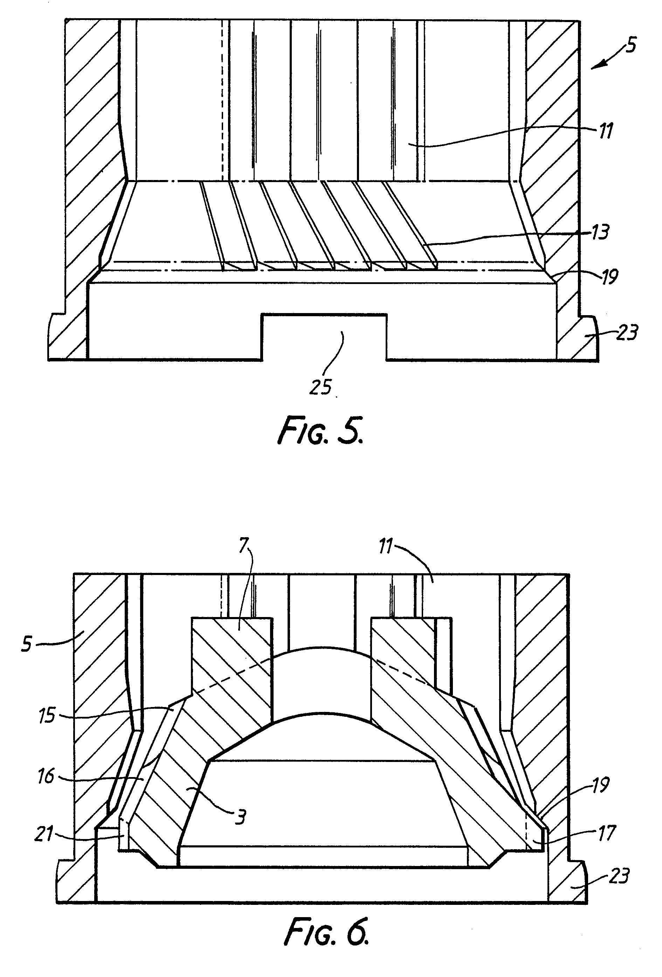

Figure 5 is a section of the female member shown in Figure 4 taken along the line V-V; and

Figure 6 is a section of a male member and a female member when in co-operation.

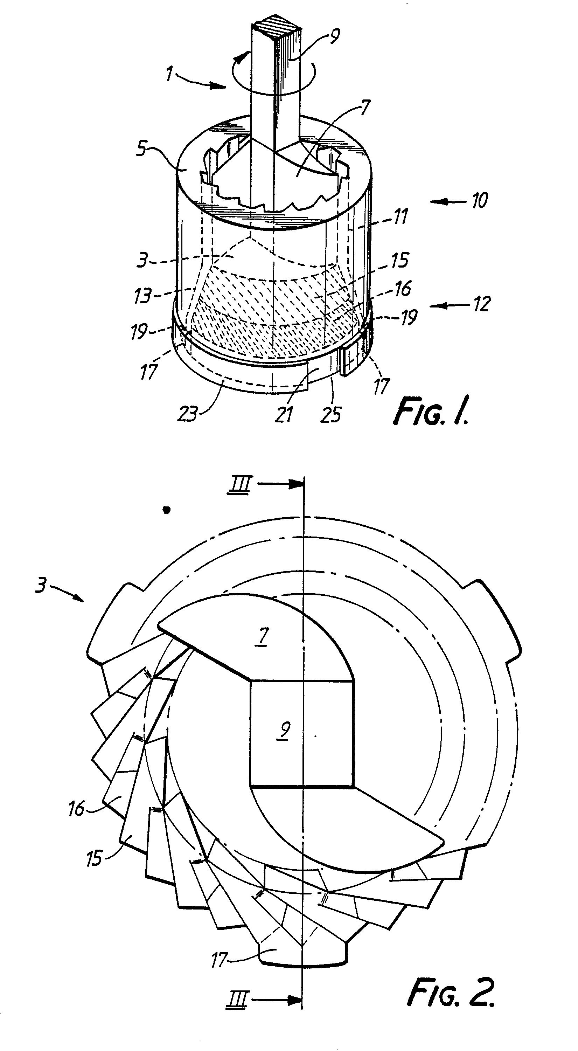

Referring to Figure 1, grinding apparatus 1 comprises a toothed male member 3 inside a generally cylindrical and internally toothed female member 5. A pair of blades 7 is situated above and integral with the male member 3 and extend towards the inside wall of the female member 5. Both the blades 7 and the male member 3 are mounted on a central shaft 9 inside the female member 5.

The blades 7 have a curved leading surface forming an arc of a circle while the back of each blade is straight (see Figure 2).

The portion of the apparatus comprising the blades 7 and a corresponding upper part of the female member 5 towards which the blades extend may be defined as a crushing zone 10. In the crushing zone 10 the female member is provided with vertically aligned teeth 11. On relative rotation of the central shaft 9 (and therefore the blades 7) with respect to the female member 5 as shown in Figure 1, condiment particle(s) may be trapped between the leading surface of a blade 7 and any one of the teeth 11 directly in front of the leading surface. On continuation of this rotation the condiment particle is thereby crushed.

The minimum distance between the edge of a blade 7 and the teeth 11 on the female member is between 0.1 and 0.4 millimetres.

The portion of the apparatus comprising the lower parts of the male and female members 3 and 5 may be defined as a grinding zone 12 (see Figure 1). In this portion, the female member 3 is provided with non-vertically aligned teeth 13. Also in this portion, the male member is provided with two sets of non-vertically aligned teeth 13 and 16 slanting in an opposite sense to the female members' teeth 13. The teeth 15 and 16 cooperate with teeth 13 to force downwards and thereby grind the crushed condiment particles. The larger teeth 15 serve to grind the coarsely crushed condiment for more efficient grinding by the smaller teeth 16.

In addition, at the base of male member 3 there are provided spacer elements in the form of three radially protruding lugs 17 which bear upon an annular surface 19 inside the female member 5. The lugs 17 and the surface 19 prevent any other contact between the male and female members 3 and 5 and ensures smoother concentric rotation of the male member 3 within the female member 5. At the base of the male member 3 there is a set of vertically aligned teeth 21.

If the condiment particles are sufficiently small having been crushed, they may fall into the spaces between the teeth 13 and 15 in the grinding zone 12. On relative rotation as described above, the particles are then ground to a finer powdered state for dispensing onto food.

The female member 5 is also provided with a flange 23 at its base and a groove 25 in the flange 23 which are used in mounting the female member 5 on a base of a housing for a condiment reservoir.

The male and female members 3 and 5, and/or the blades 7, may be manufactured using a sintered metal process. In addition, the grinding apparatus 1 may be formed from just two metal parts from their respective tooling moulds or dies.

## Claims

1. Grinding apparatus (1) suitable for a condiment mill, the apparatus comprising a pair of male and female members (3 and 5), at least one blade (7) extending from one of the members towards the other member, the or each blade (7) and the said other member cooperating to crush condiment in use of the apparatus, and the male and female members having, below the or each blade (7), cooperating grinding surfaces to grind the crushed condiment.

2. Apparatus as claimed in claim 1 in which one, some, or all of the said blades (7) are angled back in a sense opposite to that of the sense of relative rotation of the member from which the or each blade (7) extends.

3. Apparatus as claimed in claim 1 or 2 in which one, some or all of the blades (7) possess a curved leading surface.

4. Apparatus as claimed in any one of claims 1 to 3 in which there are an even number of diametrically opposed blades (7).

5. Apparatus as claimed in any one of claims 1 to 4 in which the number of blades (7) is two.

6. Apparatus as claimed in any one of claims 1 to 5 in which one, some or all of the blades (7) or vanes are fixed to or integral with the male member (3).

7. Apparatus as claimed in any of claims 1 to 6 in which either or both members are provided with teeth.

8. Apparatus as claimed in claim 7 in which the teeth in one zone are vertically aligned and in a second zone the teeth are non-vertically aligned.

9. Apparatus as claimed in any of claims 1 to 8 in which an impeller for impelling condiment to be crushed and ground is located upstream of the blade(s) (7).

10. Apparatus as claimed in any one of claims 1 to 9 in which any combination of the male member (3), female member (5), any number of the blade(s) (7) and any number of the vane(s) (if any) are made of sintered metal.

1

9

5

7

10

11

3

15

13

16

19

19

12

17

17

23    21    25

**FIG. I.**

III

3

7

9

16

15

17

III

**FIG. 2.**

*FIG. 3.*

*FIG. 4.*

FIG. 5.

FIG. 6.